# EUROPÄISCHE PATENTSCHRIFT

(11) **EP 0 968 320 B1**
(45) Veröffentlichungstag und Bekanntmachung des Hinweises auf die Patenterteilung: **08.05.2002**
(21) Anmeldenummer: 98907999.1
(22) Anmeldetag: 28.01.1998
(51) Int. Cl.: C23C 22/77, G05D 21/02

(54) **VERFAHREN ZUM HERSTELLEN GESCHWEISSTER HOHLKÖRPER**
PROCESS FOR MANUFACTURING WELDED HOLLOW BODIES
PROCEDE DE FABRICATION DE CORPS CREUX SOUDES

(30) Priorität: 31.01.1997 DE 19703641
(43) Veröffentlichungstag der Anmeldung: 05.01.2000
(73) Patentinhaber: Marx, Joachim, 45476 Mülheim an der Ruhr (DE)
(72) Erfinder: Marx, Joachim, 45476 Mülheim an der Ruhr (DE)
(74) Vertreter: Wibbelmann, Jobst, Dr., Dipl.-Chem.
(86) Internationale Anmeldenummer: EP9800440
(87) Internationale Veröffentlichungsnummer: WO9833952

(56) Entgegenhaltungen:
- GB-A- 2 153 854
- US-A- 4 565 585
- US-A- 4 657 600
- US-A- 4 886 590

## Beschreibung

Die Erfindung betrifft ein Verfahren zur Herstellung geschweißter Hohlkörper, wobei in separaten Verfahrensstufen die Konzentration der wesentlichen aktiven Komponente oder Komponenten in der eingesetzten wäßrigen Lösungen kontinuierlich aufgezeichnet und bei Abweichungen der Konzentrationen außerhalb vorgegebener Toleranzgrenzen ausgeglichen werden. Insbesondere betrifft die Erfindung ein Verfahren zur Produktion geschweißter Hohlkörper mit elektronischer Steuerung und Meßung sowie einer Dokumentation nach ISO Norm 9000ff.

Im Stand der Technik sind Anlagen allgemein bekannt, bei denen der Verfahrensablauf elektronisch überwacht wird. Solche Anlagen erfordern in der Regel erhebliche Investitionen und werden folglich auch nur dann erwogen, wenn gesetzliche Auflagen dies fordern und/oder eine notwendige Überwachung durch Mitarbeiter nicht gewährleistet werden kann. Der bei der Erstellung einer vollständig elektronisch gesteuerten Anlagen eingesetzte Aufwand wird aber nicht nur durch gesetzliche oder wirtschaftliche Vorgaben bedingt. Ein Fachmann wird sich solcher elektronischer Steuerungsmaßnahmen nur dann bedienen, wenn ein absehbarer technischer Erfolg den erheblichen Aufwand bei der Erstellung solcher Anlagen rechtfertigt. Aus diesem Grunde gibt es im Stand der Technik kaum Anlagen, bei denen sowohl die Aufzeichnung von Meßdaten als auch die Steuerung der Anlage, soweit eine Abweichung von Toleranzen festgestellt wird, vorgenommen werden. Vielmehr erschöpft sich die Aufgabe solcher Anlagen in der Überwachung und allenfalls in dem Geben von Alarmsignalen, verbunden mit Ausschaltmaßnahmen.

Verschweißte Hohlkörper werden im allgemeinen mittels der folgenden Verfahrensschritte erhalten:
1. Umformen von Stahlband, so daß Vorkörper erhalten werden, die dann miteinander verschweißt werden.
2. Verschweißen der Vorkörper zu einem im wesentlichen dichten Hohlkörper.
3. Druckprobe auf Dichtigkeit und Reinigung der erhaltenen Hohlkörper und
4. Phosphatierung derselben.

Der letzte Verfahrensschritt dient im wesentlichen dazu, die Hohlkörper mit einem Korrosionsschutz-Haftgrund auszustatten. Gegebenenfalls schließen sich an die Phosphatierung weitere Maßnahmen an, um den Korrosionsschutz und auch das Aussehen der Hohlkörper zu verbessern. Insbesondere werden Hohlkörper, wenn es sich um Heizkörper handelt, mit einer oder mehreren weiteren Schutzschichten durch eine Lackierung und/oder Pulverbeschichtung versehen.

Bei der Herstellung von Heizkörpern wurde nun festgestellt, daß die üblichen Verfahrensmaßnahmen (siehe Schritte 1 - 4 oben) nicht immer ausreichen, um einen weitgehenden Korrosionsschutz der Heizkörper zu gewährleisten. So war es unter anderem erforderlich, eine dickere Schutzschicht nebst Lackschicht aufzuziehen, um einen zufriedenstellenden Korrosionsschutz zu erhalten. Es besteht aber ein erhebliches Bedürfnis danach, die Dicke beispielsweise der zum Korrosionsschutz erforderlichen Lackschicht zu vermindern. Eine dickere Lackschicht erfordert nämlich nicht nur den Einsatz höherer Lackmengen (so daß bei Verfahren nach dem Stand der Technik höhere Kosten anfallen), sondern behindert auch den Ablauf des Gesamtproduktionsverfahrens, da die Geschwindigkeit der abschließenden Lackierungsstufe die Produktionsrate insgesamt beeinflußt.

In der deutschen Offenlegungsschrift 21 13 854 wird ein Verfahren und eine Anlage zur kontinuierlichen Überwachung und Regelung von Verfahrenslösungen beschrieben. Insbesondere wird auch eine nitritbeschleunigte Phosphatierungslösung erwähnt. Die Steuerung der Phosphatierbäder soll nach dieser Offenlegungsschrift über a) Messen der Leitfähigkeit und b) Titration von Proben der Bäder mit ionensensitiven Elektroden erfolgen. Zu diesem Zweck wird der Verfahrenslösung kontinuierlich eine Probe entnommen. Die Probelösung wird einer Filteranlage zugeführt, dann wird die Leitfähigkeit der Probelösung bestimmt, schließlich wird die Probelösung mit einer spezifischen Reagenslösung versetzt, im Anschluß daran wird die Probereagensmischung einer weiteren Meßzelle zugeführt, in der dann elektrometrisch eine vorbestimmte Ionenart gemessen wird. Entsprechend der bei diesem recht aufwendigen Verfahren gemessenenen Abweichungen werden dann Einstellungen auf einen Soll-Wert vorgenommen. Eine unmittelbare Umsetzung der in einer einzigen Messzelle oder unmittelbar in der Verfahrenslösung aufgenommenen Messwerte und Umsetzung dieser Messdaten in Steuerungsmassnahmen lassen sich dieser Offenlegungsschrift nicht entnehmen.

Sowohl US-A-4 565 585 und US-A-4 657 600 offenbaren Phosphatierungsverfahren, die über den pH-Wert und das Oxido-Reduktions-Potential gesteuert werden. Als Phosphatierungslösung kommen zinkhaltige Phosphatierlösungen zum Einsatz.

Ein Fachmann, der sich nun mit der Aufgabe beschäftigt, ein verbessertes Gesamtverfahren zur Herstellung von korrosionsgeschützten Hohlkörpern zuwendet, sieht sich mit einer Vielzahl von gedanklichen Ansätzen konfrontiert, die in erster Linie auf Verbesserungen der einzelnen Verfahrensschritte hinauslaufen. Solche Verbesserungen können beispielsweise in verbesserten Phosphatierbädern oder neuen Schutz- bzw. Lackschichten liegen.

Der Erfindung liegt somit die Aufgabe zugrunde, ein Verfahren zur Herstellung geschweißter Hohlkörper bereitzustellen, das im Ergebnis Hohlkörper mit einem verbesserten Korrosionsschutz liefert bzw. deren Herstellung mit einer höheren Geschwindigkeit ermöglicht. Diese Verbesserung liegt beispielsweise darin, daß im Vergleich zu Hohlkörpern des Standes der Technik bei gleicher Dicke der Lackschutzschicht der Hohlkörper länger korrosionsbeständig ist. Ein Vorteil liegt aber auch darin, daß erfindungsgemäß hergestellte Hohlkörper eine dünnere Lackschicht als Hohlkörper des Standes der Technik aufweisen können, wobei aber der Korrosionsschutz identisch ist. Sobald aber eine dünnere Lackierung ausreicht, kann bei identischem Schutz eine Steigerung der Produktionsrate erreicht werden.

Diese Aufgabe wird mittels eines Verfahrens gelöst, wie es in den Patentansprüchen angegeben wird.

Das erfindungsgemäße Verfahren zur Herstellung geschweißter Hohlkörper, bei dem
1) durch Umformung von Stahlband zu verschweißende Hohlkörper unter Schmierung geformt,
2) die Hohlkörper durch Verschweißen zu einem im wesentlichen dichten Hohlkörper verbunden,
3) die erhaltenen Hohlkörper auf Dichtigkeit geprüft und gereinigt und
4) phosphatiert werden,
dadurch gekennzeichnet, daß bei der Reinigung in Schritt 3) ein Reinigungsmittelkonzentrat eingesetzt wird, das ein Gemisch aus
a) 10 bis 20 Gew.% Citronensäure,
b) 10 bis 20 Gew.% eines Monoesters der Phosphorsäure und
c) 0,5 bis 5 Gew.% eines nichtionischen Tensids und/oder eines Kationentensids oder 0,5 bis 2,5 Gew.% eines Amphotensids in Wasser umfasst;
und das zur Anwendung mit Wasser auf eine Konzentration von 0,5 bis 3 % verdünnt wird;
und daß eine Eisen-Dünnschicht-Phosphatierlösung eingesetzt und im Phosphatierbad kontinuierlich der pH-Wert aufgezeichnet und bei einer Abweichung des pH-Wertes von einem vorgegebenen Wert (Soll-Wert) um ± 0,2 auf den vorgegebenen Wert ausgeglichen wird, und Phosphatierschichten einer Dicke von weniger als 1 µm aufgebracht werden.

Das Verfahren ist insbesondere dadurch gekennzeichnet, daß im Phosphatierbad kontinuierlich der pH-Wert aufgezeichnet und bei einer Abweichung des pH-Wertes von einem vorgegebenen Wert um ± 0,2 auf den vorgegebenen Wert ausgeglichen wird. Ganz besonders vorteilhaft ist das Verfahren, wenn der pH-Wert innerhalb einer Toleranz von ± 0,1 gehalten wird. Bei Phosphatierlösungen handelt es sich im allgemeinen um schwach saure Lösungen, die einen pH-Wert von 4,7 bis 5,4 aufweisen. Der optimale pH-Wert einer vorgegebenen Phosphatierlösung kann anhand einfacher Versuche in diesem Bereich festgestellt werden. Vorteilhaft ist es auch, wenn man die Temperatur in einem Bereich von ± 2,5°C konstant hält.

Weiterhin ist es vorteilhaft, die im Phosphatierbad kontinuierlich aufgenommenen pH-Werte an eine zentrale Überwachungseinheit weiterzuleiten und bei Feststellung von Abweichungen in den vorgegebenen Toleranzbereichen eine Rückführung auf den gewünschten pH-Wert ebenfalls über die zentrale Überwachungseinheit zu steuern. Die Rückführung des pH-Wertes auf den vorgegebenen Soll-Wert kann man auf verschiedene Art und Weise erreichen. Im einfachsten Fall gibt man Säuren bzw. Basen zu. Bei Abweichung des pH-Wertes im Phosphatierbad in den alkalischen Bereich bietet sich an, zum Ausgleich auf den Soll-Wert ein saures Konzentrat des Phosphatiergemisches einzusetzen.

Behandelt man nach dem erfindungsgemäßen Verfahren Stahl im Bereich von etwa 50°C über einen Einwirkzeitraum von etwa 0,5 bis 1,0 min, so erhält man regelmäßig dünne Phosphatierschichten mit einer Dicke von weniger als 1 µm, vorzugsweise 0,4 bis 0,8 µm, die neben einem temporären Korrosionsschutz die Basis für eine gute Lackhaftung bilden (Eisenphosphatschicht).

Überraschenderweise wurde bei dem erfindungsgemäßen Verfahren gefunden, daß die einfache und kontinuierliche pH-Wertmessung den Erfolg des beanspruchten Verfahrens gewährleistet.

Ein bevorzugtes Verfahren ist weiterhin dadurch gekennzeichnet, daß die Konzentration der wesentlichen aktiven Komponente/Komponenten
a) in der Schmiermittellösung bei der Umformung von Stahlband,
b) in der Reinigungslösung bei der Reinigung der verschweißten und im wesentlichen dichten Hohlkörper und
c) im Phosphatierbad im Anschluß an die Reinigung
kontinuierlich über Meßfühler aufgezeichnet, die Meßdaten an eine zentrale Überwachungseinheit weitergeleitet und Abweichungen der Konzentrationen außerhalb vorgegebener Toleranzen ausgeglichen werden.

Aufzeichnung der Konzentration der aktiven Komponente bedeutet hier, daß auf direktem oder indirektem Wege mittels elektronischer Meßfühler in den Lösungen, wie sie in den einzelnen Verfahrensschritten zum Einsatz kommen, die für die Wirkung der Lösungen entscheidenden Komponenten aufgezeichnet werden. Beispielsweise ist es im Falle der Schmiermittellösung das Schmiermittel und im Falle der Reinigungslösung das Tensid. Eine zentrale Überwachungseinheit im Sinne der Erfindung ist beispielsweise ein Computer, der über eine Fernleitung (beispielsweise Telefon) mit der Produktionsanlage in Verbindung steht und dazu geeignet ist, die elektronisch aufgenommenen Meßdaten aufzunehmen und zu bearbeiten sowie darzustellen. Eine solche Darstellung der Meßdaten kann drucktechnisch oder über einen Bildschirm erfolgen. Darüberhinaus ist vorgesehen, daß von der Überwachungseinheit ausgehend ein Eingriff in den Verfahrensablauf möglich ist, um bei Abweichungen der Konzentrationen der wesentlichen aktiven Komponenten in den verfahrensgemäß eingesetzten Lösungen ein Rückführen der Konzentrationen auf Werte innerhalb der erwünschten Toleranzen zu ermöglichen. Ein Fachmann kann die einzuhaltenden Toleranzen ohne großen Aufwand feststellen. Es haben sich für die Einstellung des pH-Wertes und der Leitfähigkeit insbesondere die folgenden Toleranz-grenzen bewährt:
- für den pH-Wert: ± 0,15
- für die Leitfähigkeit: ± 250 mS

Darüberhinaus sollte die Temperatur in den Behandlungsbädern mit einer Toleranzgrenze von ± 2,5°C eingestellt bzw. gesteuert werden.

Erfindungsgemäß kann beispielsweise ein korrosionsbeständiger Heizkörper erhalten werden, der bereits mit sehr dünnen Phosphatierungsschichten in der Größenordnung von weniger als 1 µm einen ausreichenden Korrosionsschutz aufweist. Hierzu sind im Rahmen der Erfindung nur wenige orientierende Versuche gegebenenfalls erforderlich, wobei es in der Regel ausreicht, relativ enge Toleranzen in der Schmiermittellösung und der Reinigungslösung zu beachten. Der Erfindung liegt aber nicht die Erkenntnis zugrunde, daß lediglich die Einhaltung bestimmter Toleranzgrenzen ausreichend ist, um den Erfolg des gesamten Verfahrens zu erreichen. Vielmehr steht im Vordergrund die Erkenntnis, daß eine kontinuierliche Aufzeichnung und anschließende Steuerung ganz bestimmter hier angegebener Verfahrensschritte in überraschender Weise Verbesserungen beim Korrosionsschutz bewirken. Ausgehend von der Erkenntnis der Erfindung kann ein Fachmann die einzelnen erforderlichen Einrichtungen, sprich: Meßfühler, zentrale Überwachungseinheit und Mittel zum Ausgleich festgestellter Abweichungen ohne weiteres bereitstellen. Solche Einrichtungen sind allgemein bekannt und im Handel erhältlich. Deshalb erübrigen sich an dieser Stelle weitere technische Ausführungen zu diesen Einrichtungen.

Die vorliegende Erfindung beschäftigt sich nicht nur mit ökonomisch und ökologisch darstellbaren Fortschritten der Verfahrenstechnik, sondern überrascht mit der Möglichkeit durch klar abgegrenzte Verfahrensschritte, durch Meßtechnik und damit verbundenen Dokumentationsmöglichkeiten, den Vorstellungen und Vorschriften ISO 9000ff zu gehorchen und als Gesamt-Produktionsvorgang zertifizierbar zu sein.

Die Herstellung von Hohlkörpern, beschrieben am Beispiel der Produktion von Heizkörpern, erfolgt in kontinuierlich aufeinander folgenden Schritten, wobei jeder Verfahrensschritt die präzise und störungsfreie Führung des vorhergehenden Schrittes erfordert. Neben der Steuerung der Arbeitsmaschinen wie Pressen, Schweißanlagen, Phosphatieranlagen bis hin zur Lackierung und evtl. Pulverbeschichtung werden alle Hilfsstoffe wie Schmierstoffe, Reinigungslösungen oder Phosphatiergemische mit Hilfe ausgewählter Meßtechnik überwacht, mengenmäßig zugeführt, gleichzeitig dokumentiert. Sinngemäß gilt dies auch für die Schlußbehandlung z.B. bei der Lackierung bzw. Grundierung in einer KTL-Anlage mit anschließender Pulverbeschichtung.

Nach dem vorliegenden Verfahren werden die Meßergebnisse und die aus den Messungen zwingend erfolgenden Zudosierungen von Hilfsstoffen oder chemischen Beschichtungsmitteln aus einem zentralen Rechner übertragen, die Meßwerte werden zu den Lieferanten über ISDN-Anschlüsse z.B. der Telekom zum Lieferanten fernübertragen. Die Lieferanten sind in der Lage, jederzeit die Funktionen der Anlagen zu überwachen, z.B. auf einem Bildschirm oder sogar im Gegenzug elektronisch fernübertragen die Steuerung von Dosieranlagen zu beinflussen; dies alles in bezug auf Mehr- oder Minderleistung entsprechend der übermittelten Meßergebnisse online in Realzeit.

Eine weitere Steigerung der Übertragungsrate und damit schneller Eingreifmöglichkeit bietet die satellitengestützte Datenübertragung. Der wirtschaftliche Fortschritt durch Material und Personaleinsparungen ist sehr erheblich, das gilt auch in ganz besonderer Weise für das Wartungspersonal und die Kosten für die Lieferanten.

Erfindungsgemäß gelingt es beispielsweise, die Stückkosten pro Produkteinheit, ermittelt aus der Geschwindigkeit des Förderbandes von 4 m/min auf 11 m/min, zu senken.

Unter Schmierstoffen bzw. Schmiermitteln versteht man üblicherweise solche Stoffe, die Reibung und Beanspruchung beispielsweise sich gegen- oder aufeinander bewegender Maschinenteile vermindern. Sie verhindern dadurch Energieverbrauch und Materialverschleiß und wirken ferner als Kühlmittel. Synthetische Schmierstoffe selbst sind seit vielen Jahren bekannt und werden u.a. für Umformzwecke eingesetzt, ohne sich jedoch bis heute voll durchgesetzt zu haben. Dies liegt an dem oft mangelhaften Korrosionsschutz und daneben auch an einer Reihe weiterer Probleme, wie z.B. der meist hohen Viskosität sowie der oft geringen biologischen (Umwelt-)Verträglichkeit.

Nach dem Stanzen, Prägen, Pressen und Beschneiden können die erhaltenen Formteile zusammengefügt und verschweißt werden. Dabei ist es wichtig, daß bei einem Schweißvorgang an den Metallteilen haftende Schmierstoffrückstände möglichst ohne Kohlenstoffabscheidung verbrennen, so daß sich keine unerwünschten Ablagerungen auf den Formteilen bilden. Gleichzeitig sind ein geringer elektrischer Widerstand an den Schweißrollen und die erreichbare Schweißgeschwindigkeit ganz entscheidend für die Wirtschaftlichkeit des Verfahrensschrittes Umformen und Verschweißen der Formteile.

Der erste Schritt der Produktion von Hohlkörpern wie Radiatoren oder Konvektoren besteht in der Umformung von Stahl vom Coil weg durch Pressen, Prägen, Stanzen, Tiefziehen. Diese Arbeitsgänge müssen geschmiert werden. Hierzu wird ein Schmiermittel beispielsweise durch das Durchziehen des Bandes vom Coil durch die Wanne, die mit dem Schmiermittel gefüllt ist, durch Aufwalzen oder im Sprühverfahren aufgetragen. Erfindungsgemäß werden besonders im Interesse der folgenden Arbeitsgänge nur wasserverdünnbare, durchsichtige öl- und fettfreie Schmiermittel eingesetzt. Die Konzentration wird durch Messung der Leitfähigkeit bestimmt, überwacht, sowie registriert, um den Verbrauch ermitteln zu können. Wasserverdünnbare, in der Regel nicht emulgierbare Schmierstoffgemische weisen zur geringe, zu Messungen kaum verwertbare Leitfähigkeiten auf. Es sind Zusätze erforderlich, um den Mischungen in Wasser eine meßtechnisch verwertbare Größe der Leitfähigkeit zu geben. Hierfür kommen gut lösliche definierte Salze infrage, als Beispiel dient Natrium-sulfat. Erfindungsgemäß wird vorzugsweise mit Ethanolamin neutralisierte phosphorige Säre verwandt, die überraschenderweise günstige Korrosionsschutzwirkungen zeigt, was sich positiv auf die Gesamtproduktion auswirkt. Ebenfalls günstig wirken sich Ehtanolaminsalze aber auch Alkalisalze von Phosphonaten aus.

Zur Verminderung der Zunderbildung bei dem folgenden Arbeitsprozeß, in der Regel dem Zusammenschweiße der Formteile, ist ein Zusatz von 5 - 10 % einer Borverbindung vorteilhaft, erfindungsgemäß in der Form eines Ethanolaminsalzes, wobei grundsätzlich nur Ethanolamine verwandt werden, die keine karzinogen wirkende Nitrosaminverbindungen bilden können (wie speziell sek. Amine).

Erfindungsgemäß wird für dieses Verfahren ein Schmierstoffkonzentrat bereitgestellt, enthaltend ein Gemisch aus:
a) 10 bis 30 Gew.-% wenigstens eines korrosionsarmen, umweltverträglichen Polyalkylenglykol-Grundöls,
b) 2 bis 10 Gew.-% wenigstens eines Korrosionsschutzmittels, und
c) 2,5 bis 10 Gew.-% wenigstens eines Lösungsmittels, ausgewählt aus der Gruppe der C₂- bis C₅-Alkanole und niederen Glykolether, wie beispielsweise Diproplyenglykolmethylether,
d) Monoethanolaminsalz einer Phosphonsäure in Wasser.

Vorzugsweise enthält das Schmierstoffkonzentrat ein Gemisch aus:
a) 20 bis 27 Gew.-% wenigstens eines korrosionsarmen, umwelt-verträglichen Polyethylenglykol-Grundöls,
b) 5,0 bis 10 Gew.-% einer Borverbindung und
c) 2,5 bis 10 Gew.-% wenigstens eines Lösungsvermittlers, ausgewählt aus der Gruppe der C₂- bis C₅-Alkanole und niederen Glykolether,
d) 2,5 - 5 % Salz der Phosphonsäure, vorzugsweise Zinksalze gepuffert mit handelsüblichen Polymeren der Acryl- und/oder Maleinsäure (Handelsnamen Sokalan (BASF)).

Die erfindungsgemäß ausgewählten Polyalkylenglykolether wurden hinsichtlich ihrer biologischen Verträglichkeit mit der Umwelt, guten Schmierwirkung bei unterschiedlichen Temperaturen, insbesondere bei Temperaturen von 200 bis 350°C, rückstandsfreiem Verdampfen bei Wärmebehandlung und möglichst geringer Korrosivität ausgewählt. Bevorzugte Polyalkyenglykole sind Polymerisate aus Ethylen- und Propylenoxid, vorzugsweise in einem Verhältnis von 4 : 1 sowie PEG : PPG 20.000. (Diese werden von der Firma HOECHST AG unter der Bezeichnung Polyglykole P41, B II, B 01 vertrieben).

Das erfindungsgemäße Schmierstoffkonzentrat wird zur Anwendung mit Wasser auf eine Konzentration von 5 bis 20 %, vorzugsweise 3 bis 10 % vedünnt. In dieser Anwendungskonzentration kann der erfindungsgemäße Schmierstoff seine Schmierwirkung bei Anwendungen wie dem Bohren, Fräsen, Pressen, Ziehen oder ähnlichem voll entfalten. Bei kontinuierlicher Arbeitsweise, wie sie beispielsweise bei der Produktion von Heizkörpern üblich ist, kann ein Stahlband vom Coil weg vor dem Einlauf in die Presse durch eine Wanne laufen, die den erfindungsgemäßen verdünnten Schmierstoff enthält. Das Stahlband wird dann ohne Probleme von dem Schmierstoff benetzt. Auch für die Fertigung von Schalen für Heizkörper ist das erfindungsgemäße Schmierstoffkonzentrat besonders geeignet. Er besitzt zudem den Vorteil, den auf das Pressen folgenden Schweißvorgang zu erleichtern, indem er die Zunderbildung minimiert. Rückstände des erfindungsgemäßen Schmierstoffs verdampfen ohne größere Geruchsbelästigung und fördern das Schweißen durch gute Leitfähigkeit und die Wirkung der oxidationshemmenden Zusätze.

Als Korrosionsschutzkomponenten für verstärkten Schutz bei Zwischenlagerungen, wie sie bei älteren diskontinuierlich arbeitenden Produktionen noch vorkommen, empfehlen sich erfindungsgemäß Ethanolaminsalze modifizierter Phthalatsäuren, etwa ein Imid der (Chemical Abstracts Service Registry Nummer) CAS Nr.94109-17-8 oder C₈ bis C₁₆ Fettamine als Ethoxylate mit vorzugsweise 2 - 5 Ethoxygruppen. Die synergistische Inhibitorwirkungen im Zusammenwirken mit den Boraten sind unerwartet groß. Ein quartäres Amin, das Poly(oxyethylen(dimethylimino)-ethylen(dimethylimino)ethylendichlorid erweist sich überraschenderweise als besonders schaumarmer Aktivator.

Nach dem Umformen des Stahls werden zwei oder mehr Teile durch Widerstandsschweißen und Punkten miteinander verbunden. Für diesen Arbeitsgang werden keine chemischen Zusätze benötigt, wenn man von Verlauf-Hilfsstoffen beim Einfügen von Gewindeteilen und anderem Zubehör absieht.

Die zu Hohlkörpern zusammengefügten Stahlteile werden in der Regel durch Abdrücken in Wasserbecken mit Druckluft auf Dichtigkeit geprüft. Die Werkstücke bringen zumeist genug Korrosionsschutz von den Verformungshilfsmitteln mit, um auch in Wasser kurzzeitig korrosionsfrei zu bleiben. Wenn das nicht der Fall ist, werden die gleichen Korrosionszusätze, wie sie bei dem Umformungsprozeß verwandt werden, z.B. Borsäure- und die o.a. Phthalimide dem Abdrückwasser zugesetzt.

Als nächster Arbeitsgang werden die fertig verschweißten Werkstücke gereinigt, d.h. von anhaftenden Fettresten (vom Coil stammend), Schweißhilfsmitteln s.o., und Staub usw. gereinigt. Im allgemeinen werden für die Reinigung von Metalloberflächen wäßrige Waschmittel (Seifen, Tenside), Lösungsmittel, wie leichte Mineralöle, niedrig siedende Ether, Glykolether oder früher halogenierte Kohlenwasserstoffe eingesetzt. Diese herkömmlichen Reinigungsmittel für Metalloberflächen sowie gewisse, in kleinen unauffälligen Mengen mitverwandte Inhibitoren weisen aber erhebliche ökologische Nachteile auf, da sie größtenteils nicht biologisch abbaubar sind und deren toxische Wirkung sich durch Anreicherung im Wasser in der z.B. Nahrungsmittelkette verstärkt. Daher wurden umweltverträglichere Reinigungsmittel entwickelt, die zumindest teilweise biologisch abbaubar oder zumindest aus den Abwässern eliminierbar sind. Derartige Reinigungsmittel sind beispielsweise in der DE-PS 41 02 709 beschrieben. Die bekannten biologisch abbaubaren Reinigungsmittel sind jedoch nicht geeignet, alle Anforderungen zu erfüllen, die an hochreine, aktivierte Metalloberflächen gestellt werden, die für die Phosphatierung und Lackierung vorbereitet werden.

Erfindungsgemäß werden sauer eingestellte tensidhaltige Produkte eingesetzt, die einen pH zwischen 4 und 6 aufweisen.

Für die erfindungsgemäße Reinigung der Oberflächen des Metallformkörpers wird ein Reinigungsmittelkonzentrat bereitgestellt, enthaltend ein Gemisch aus:
a) 10 bis 20 Gew.-% Citronensäure,
b) 10 bis 20 Gew.-% eines Monoesters von Phosphorsäuure und
c) 0,5 bis 5 Gew.-% eines nichtionischen Tensids und/oder eines Kationentensids in Wasser.

Als Monoester der Phosphorsäure werden vorzugsweise deren Methyl-, Ethyl-, n-Propyl-, i-Propyl-, n-Butyl-, tert.-Butylester eingesetzt. Andere Monoester der Phosphorsäure sind ebenfalls verwendbar.

Citronensäure kann in jeder handelsüblichen Form eingesetzt werden. Sie kann kristallin oder in Pulverform vorliegen. Besonders bevorzugs ist das Monohydrat.

Geeignete nichtionische Tenside sind Alkylpolyglykolether, insbesondere Fettalkoholethoxylate. Besonders bevorzugt werden Addukte von Ethylenoxiden an Fettalkohole, wobei der Anteil der Ethylenoxideinheiten üblicherweise 6 bis 20 beträgt und die Fettalkohole aus natürlich nachwachsenden Rohstoffen erhalten werden. Vorzugsweise weist der Fettalkoholanteil 12 bis 18 C-Atome auf. Besonders bevorzugte Tenside sind Alkyl(C₁₂-C₁₈)polyethylglykol - Polybutylenglykol (< 8 BuO)ether, die einen HLB-Wert von weniger als 9 aufweisen.

Als kationische Tenside werden vorzugsweise (C₈-C₁₈)-Alkylaminethoxylate mit 5 bis 10 Ethoxygrupen und solche aus der Gruppe der quartären Ammoniumverbindungen, wie die Dialkylfettalkylammoniumchloride eingesetzt. Von den letzteren wird insbesondere Dimethylfettalkylammoniumchlorid und Poly{hydroxyethylen(dimethylimono)ethylen(dimethylimino)methylendichlorid} bevorzugt oder deren Derivat Poly{2-hydroxyethylen(dimethylimino)-2-hydroxypropylen(dimethylimino)methylendichlorid}.

Die erfindungsgemäß eingesetzten Amphotenside sind:
1-Hydroxyethyl-2-alkyl-imidazolin (erhältlich von der Firma Rewo) oder auch Caprylamphopropionat oder Cocosamphopropionat als Alkalisalz. (Diese Tenside werden von der Firma Mona unter der Bezeichnung Monaferic Surfactants vertrieben.)

Diese Amphotenside werden in Mengen von 0,5 bis 2,5 Gew.-%, vorzugsweise 0,5 bis 2 Gew.-%, bezogen auf das Reinigungsmittel-Konzentrat eingesetzt.

Das erfindungsgemäße Reinigungsmittel-Konzentrat kann weiterhin ein pH-Wert regulierendes Mittel enthalten. Insbesondere wird als pH-Wert regulierendes Mittel 45 %ige Kalilauge zugegeben, um einen pH-Wert von ca. 2 bis ca. 6 zu erzielen.

Das erfindungsgemäße Gemisch wird zur Anwendung mit Wasser auf eine Konzentration von 0,5 bis 3, vorzugsweise 1 bis 2 %, verdünnt.

Die Reinigung kann mit jeder üblichen Verfahrensweise durchgeführt werden. Vorzugsweise erfolgt die Reinigung im Tauchbecken oder durch Sprühauftrag des auf Anwendungskonzentration verdünnten Reinigungsmittel-Konzentrats.

Das Reinigungsverfahren ist sowohl für die Heißreinigung als auch für die Warmreinigung geeignet. Bevorzugt wird ein Temperaturbereich von 35 bis 60°C.

Mit dem Reinigungsmittel-Konzentrat können die Oberflächen von Metallformkörpern äußerst effektiv von störenden Ablagerungen wie Zunder oder Rost ebenso wie Staub und Schmutz aus Zwischenlagerungszeiten befreit werden. Gerade dies ist entscheidend, falls eine Weiterverarbeitung wie Phosphatierung und/oder Lackierung gewünscht wird. Die Reinigungswirkung liegt über derjenigen von bekannten Produkten.

Ein weiterer Vorteil ist die Aktivierung der Metalloberfläche durch das Reinigungsmittel. Es können so anschließend sehr dünne Phosphatierungsschichten von weniger als 1 µm aufgebracht werden. Bei Einsatz des Verfahrens und des Reinigungsmittel-Konzentrates der Erfindung erreicht man Korrosionsschutzwerte bei einer auf die Reinigung folgenden Eisen-Dünnschichtphosphatierung, die bisher nur mit Zinkphosphatierungen möglich wurden. Diese Oberflächenaktivierung mit dem Reinigungsmittel der Erfindung ist umso überraschender, da Citronensäure und der Phosphorsäureester, welche als schwache Säuren wirken, eine Beizwirkung und einen damit verbundenen Materialverlust erwarten ließen.

Je nach Verwendungszweck kann der Formkörper nach erfolgter Reinigung mit einer oder mehreren Schutzschichten überzogen werden. Üblicherweise werden dazu eine Phosphatierungsschicht und/oder Lackschicht auf die Metalloberfläche des Formkörpers aufgebracht. Diese Beschichtungen können mit jedem herkömmlichen Verfahren durchgeführt werden, bevorzugt werden die KTL-Lackierung mit oder ohne folgende Pulverbeschichtung.

Erfindungsgemäß wird die Phosphatierung der Stahloberflächen der Hohlkörper, die nach dem geschilderten Verfahren produziert wurden, mit handelsüblichen Eisen-Dünnschicht-Phosphatierlösungen erzeugt. Die erfindungsgemäße Besonderheit ist neben der Verwendung kationogener und spezieller nichtionogener Tenside die elektronisch gesteuerte und überwachte Phosphatierungsanlage. Sowohl die Temperatur als auch die Konzentration des oder der Phosphatierbäder im Verbund mit der Verweilzeit der Stahlteile zur Ausbildung einer gleichmäßig dicken und dichten Phosphatierschicht werden in geringen Toleranzen gesteuert. Ein Zusammenhang zwischen einfacher pH-Wert-Messung und Gewährleistung dichter Phosphatierungsschichten hat im Stand der Technik niemand erkannt.

Obwohl die Steuerung vollautomatisch arbeitet, werden die Anlagen nicht nur an den Produktionsstandorten ständig überwacht und die Meßergebnisse aufgezeichnet, sondern durch online Fernübertragung auch beim Lieferanten und damit für die resultierende Qualität, hier Haftung und Korrosionsschutz der Formkörper mitverantwortlich, aufgezeichnet. Erfindungsgemäß wird in der Regel einer graphischen Darstellung auf dem Bildschirm wegen der plastischen Anschaubarkeit der Vorzug gegeben, obwohl alle Meßdaten natürlich auch tabellarisch zur Verfügung stehen.

Auf die Phosphatierung selbst erfolgt üblicherweise die Spülung mit Wasser verschiedener Reinheit und abschließend eine Beschichtung durch Lackierung z.B. im KTL-Verfahren. Es hat sich erwiesen, daß zwischen einer präzise nach der erfindungsgemäß hergestellten Phosphatierung und einer sorgfältigen Beschichtung der Zusammenhang besteht, daß die Stärke der Lackschicht, die notwendig ist, um einen zeitlich definierten Korrosionsschutz zu erreichen, erheblich geringer und damit billiger sein kann und auch tatsächlich in der Praxis ist.

Auch die Lackierbecken, gleich nach welchem Verfahren gearbeitet wird, sind ebenfalls leicht elektronisch z.B. durch Messen der Leitfähigkeit zu überwachen und gegebenfalls auch steuerbar.

Als Abschluß des Gesamtverfahrens und unabhängig von Einzelschritten wird erfindungsgemäß automatisch die erzielte Schichtstärke gemessen, die Daten gespeichert und auch, wenn gewünscht, auf dem Bildschirm graphisch dargestellt. Beispielsweise kann nach Abschluß des Gesamtverfahrens, also nach der Lackierung, die resultierende Gesamtstärke magnetisch induktiv gemessen und die dabei ermittelten Daten auf einen (zentralen) Rechner übertragen werden.

Wie bereits oben ausgeführt, erlaubt die elektronische Überwachung, Steuerung, Speicherung der Produktionsdaten und des möglichen äußeren fernübertragenen Eingriffs durch die Lieferanten der Systemkomponenten nicht nur kostengünstige Stückpreise der Produktionsgüter, sondern auch deren Qualitätsnachweise nach ISO 9000ff.

## Patentansprüche

1. Verfahren zur Herstellung geschweißter Hohlkörper, bei dem
1) durch Umformung von Stahlband zu verschweißende Hohlkörper unter Schmierung geformt,
2) die Hohlkörper durch Verschweißen zu einem im wesentlichen dichten Hohlkörper verbunden,
3) die erhaltenen Hohlkörper auf Dichtigkeit geprüft und gereinigt und
4) phosphatiert werden,
**dadurch gekennzeichnet, daß** bei der Reinigung in Schritt 3) ein Reinigungsmittelkonzentrat eingesetzt wird, das ein Gemisch aus
a) 10 bis 20 Gew.% Citronensäure,
b) 10 bis 20 Gew.% eines Monoesters der Phosphorsäure und
c) 0,5 bis 5 Gew.% eines nichtionischen Tensids und/oder eines Kationentensids oder 0,5 bis 2,5 Gew.% eines Amphotensids in Wasser umfasst;
und das zur Anwendung mit Wasser auf eine Konzentration von 0,5 bis 3 % verdünnt wird;
und daß eine Eisen-Dünnschicht-Phosphatierlösung eingesetzt und im Phosphatierbad kontinuierlich der pH-Wert aufgezeichnet und bei einer Abweichung des pH-Wertes von einem vorgegebenen Wert (Soll-Wert) um ± 0,2 auf den vorgegebenen Wert ausgeglichen wird, und Phosphatierschichten einer Dicke von weniger als 1 um aufgebracht werden.

2. Verfahren nach Anspruch 1, **dadurch gekennzeichnet, dass** bei einer Abweichung des pH-Wertes von dem Soll-Wert um ± 0,1 auf den Soll-Wert ausgeglichen wird.

3. Verfahren nach Anspruch 1 oder 2, **dadurch gekennzeichnet, dass** im Phosphatierbad die Temperatur mit einer Toleranz von ± 2,5 konstant gehalten wird.

4. Verfahren nach einem der vorstehenden Ansprüche, **dadurch gekennzeichnet, dass** im Phosphatierbad eine Phosphatierungsschicht mit einer Dicke von 0,4 bis zu 0,8 µm aufgebracht wird.

5. Verfahren nach einem der vorstehenden Ansprüche, **dadurch gekennzeichnet, dass** die Konzentration der wesentlichen aktiven Komponente/Komponenten
a) in der Schmiermittellösung in Schritt 1), und/oder
b) in der Reinigungslösung in Schritt 3)
kontinuierlich über Messfühler aufgezeichnet, die Messdaten an eine zentrale Überwachungseinheit weitergeleitet und Abweichungen der Konzentrationen außerhalb vorgegebener Toleranzen ausgeglichen werden.

6. Verfahren nach einem der vorstehenden Ansprüche, **dadurch gekennzeichnet, dass** zusätzlich mindestens eine Schutzschicht und eine Lackierung auf die Hohlkörper im Anschluß an Schritt 4) aufgebracht werden.

7. Verfahren nach einem der vorstehenden Ansprüche, **dadurch gekennzeichnet, dass** die Konzentration in der Schmiermittellösung in Schritt 1) über die Leitfähigkeit gemessen wird.

8. Verfahren nach einem der vorstehenden Ansprüche, **dadurch gekennzeichnet, dass** das Reinigungsmittel in Schritt 3) sauer eingestellt wird und ein Kationtensid enthält.

9. Verfahren nach einem der vorstehenden Ansprüche, **dadurch gekennzeichnet, dass** in der Reinigungslösung in Schritt 3) der pH-Wert aufgezeichnet wird.

## Claims

1. A process for the manufacture of welded hollow bodies wherein
1) hollow bodies to be welded are shaped by forming steel strip, with lubrication,
2) the hollow bodies are joined by welding to obtain a substantially leak proof hollow body,
3) the hollow bodies obtained are tested for leaks and cleaned, and
4) phosphated,
**characterised in that**, during cleaning in step 3), a cleaning agent concentrate is used which comprises a mixture of
a) 10 wt.% to 20 wt.% of citric acid,
b) 10 wt.% to 20 wt.% of a monoester of phosphoric acid, and
c) 0.5 wt.% to 5 wt.% of a nonionic surfactant and/or of a cationic surfactant or 0.5 wt.% to 2.5 wt.% of an amphoteric surfactant in water;
and which is diluted with water to a concentration of 0.5% to 3% for use;
and **in that** a thin layer iron phosphating solution is used and the pH in the phosphating bath is recorded continuously and, if the pH deviates by ± 0.2 from a specified value (set point) the pH is adjusted to the specified value, and phosphating layers having a thickness of less than 1 µm are applied.

2. A process according to claim 1, **characterised in that**, if the pH deviates by ± 0.1 from the set point the pH is adjusted to the set point.

3. A process according to claim 1 or 2, **characterised in that** the temperature in the phosphating bath is kept constant with a tolerance of ± 2.5.

4. A process according to one of the preceding claims, **characterised in that** a phosphating layer having a thickness of 0.4 µm to 0.8 µm is applied in the phosphating bath.

5. A process according to one of the preceding claims, **characterised in that** the concentration of the principal active component/s
a) in the lubricant solution in step 1) and/or
b) in the cleaning solution in step 3)
is recorded continuously by means of sensors, the measurement data are relayed to a central monitoring unit and deviations in the concentrations outside specified tolerances are compensated for.

6. A process according to one of the preceding claims, **characterised in that**, in addition, at least one protective layer and a coating are applied to the hollow bodies after step 4).

7. A process according to one of the preceding claims, **characterised in that** the concentration in the lubricant solution in step 1) is measured by means of the conductivity.

8. A process according to one of the preceding claims, **characterised in that** the cleaning agent in step 3) is adjusted to an acid pH and contains a cationic surfactant.

9. A process according to one of the preceding claims, **characterised in that** the pH in the cleaning solution in step 3) is recorded.

## Revendications

1. Procédé de fabrication de corps creux soudés, dans lequel :
1) des corps creux à souder sont formés par formage de bande d'acier sous lubrification,
2) les corps creux sont reliés par soudage en un corps creux sensiblement étanche,
3) l'étanchéité des corps creux obtenus est vérifiée et ils sont nettoyés et
4) phosphatés,
**caractérisé en ce que** lors du nettoyage de l'opération 3) on utilise un concentré de produit de nettoyage formé d'un mélange de
a) 10 à 20 pour cent en poids d'acide citrique,
b) 10 à 20 pour cent en poids d'un monoester de l'acide phosphorique et
c) 0,5 à 5 pour cent en poids d'un agent tensioactif non ionique et / ou d'un agent tensioactif cationique ou de 0,5 à 2,5 pour cent en poids d'un agent tensioactif ampholytique dans de l'eau;
et qui est dilué pour son utilisation dans de l'eau à une concentration de 0,5 à 3%;
et **en ce qu'**une solution de phosphatage en couche mince contenant du fer est utilisée et le pH est relevé de façon continue dans le bain de phosphatage et lors d'un écart du pH d'une valeur prescrite (valeur de consigne) de ± 0,2 on le compense à la valeur prescrite, et des couches de phosphatage d'une épaisseur de moins d'un µm sont appliquées.

2. Procédé selon la revendication 1, **caractérisé en ce qu'**on compense à la valeur prescrite une déviation du pH de ± 0,1 par rapport à la valeur prescrite.

3. Procédé selon la revendication 1 ou 2, **caractérisé en ce que** la température dans le bain de phosphatage est maintenue constante avec une tolérance de ±2,5.

4. Procédé selon l'une quelconque des revendications précédentes, **caractérisé en ce qu'**une couche de phosphatage ayant une épaisseur de 0,4 à 0,8 µm est appliquée dans le bain de phosphatage.

5. Procédé selon l'une quelconque des revendications précédentes, **caractérisé en ce que** la concentration du ou des composants actifs essentiels est relevée
a) dans la solution de lubrifiant dans l'opération 1) et / ou
b) dans la solution de nettoyage dans l'opération 3),
de façon continue par un capteur de mesure, les données de mesures sont transmises à une unité de surveillance centrale et des écarts des concentrations sortant des tolérances prescrites sont compensées.

6. Procédé selon l'une quelconque des revendications précédentes, **caractérisé en ce que** de plus au moins une couche protectrice et une laque sont appliqués sur les corps creux à la suite de l'opération 4).

7. Procédé selon l'une quelconque des revendications précédentes, **caractérisé en ce que** la concentration dans la solution de lubrifiant est mesurée dans l'opération 1) par l'intermédiaire de la conductivité.

8. Procédé selon l'une quelconque des revendications précédentes, **caractérisé en ce que** le produit de nettoyage de l'opération 3) est ajusté pour être acide et contient un agent tensioactif cationique.

9. Procédé selon l'une quelconque des revendications précédentes, **caractérisé en ce que** le pH est relevé dans la solution de nettoyage dans l'opération 3).
